# EUROPEAN PATENT SPECIFICATION

(11) **EP 4 357 222 B1**
(45) Date of publication and mention of the grant of the patent: **07.10.2026**
(21) Application number: 22824111.3
(22) Date of filing: 09.06.2022
(51) Int. Cl.: B62D 21/00, B62D 63/02, B65G 35/00, B62D 61/00, B62D 21/10

(54) **CHASSIS STRUCTURE AND TRANSPORT VEHICLE**
FAHRGESTELLSTRUKTUR UND TRANSPORTFAHRZEUG
STRUCTURE DE CHÂSSIS ET VÉHICULE DE TRANSPORT

(30) Priority: 18.06.2021 CN 202121369890 U
(43) Date of publication of application: 24.04.2024
(73) Proprietor: Hangzhou Hikrobot Co., Ltd., Hangzhou, Zhejiang 310051 (CN)
(72) Inventor: LV, Wangbiao, Hangzhou, Zhejiang 310051 (CN); BAI, Han, Hangzhou, Zhejiang 310051 (CN)
(74) Representative: Epping - Hermann - Fischer
(86) International application number: PCT/CN2022/097801
(87) International publication number: WO 2022/262631

(56) References cited:
- EP-A1- 2 991 889
- EP-A1- 3 296 186
- WO-A1-2019/183599
- CN-A- 103 318 261
- CN-A- 105 730 553
- CN-U- 202 279 032
- CN-U- 209 870 606
- CN-U- 210 191 591
- CN-U- 215 663 647
- KR-A- 20210 049 373
- US-A1- 2019 351 801
- US-A1- 2020 017 145

## Description

The present application claims the priority to a Chinese Patent Application No. 202121369890.5, filed with China National Intellectual Property Administration on June 18, 2021 and entitled "Chassis Structure and Transport Vehicle".

### Technical Field

The present disclosure relates to mobile handling robot technology, and in particular to a chassis structure and a transport vehicle.

### Background

With the emergence of intelligent manufacturing in a wide range around the world, a mobile handling robot as a core device of intelligent logistics have been developed significantly in recent years, and an automated logistics transport vehicle (such as an Automated Guided Vehicle (AGV), a Rail Guided Vehicle (RGV), an Intelligent Guided Vehicle (IGV), etc.) is one of the important members thereof.

In related technologies, the chassis structure of the transport vehicle has a standard size and can only be applied to a single type of vehicle. This results in a need to develop and produce, for different types of transport vehicles, chassis structures that match the sizes of the different types of transport vehicles, thereby increasing the manufacturing cost of transport vehicles.

Document WO 2019/183599 A1 discloses a mobile drive unit including a pivot between the front chassis unit and the rear chassis unit, thereby diminishing the total height of the unit. This document also discloses a chassis structure according to the preamble of claim 1.

Document CN 105 730 553 A discloses an AGV chassis structure which can self-adapt to ground deformation, comprising a frame, a driving device and carrier wheels. The movable frame 1 comprises a first movable frame 11 and a second movable frame 12, the inner end of the first movable frame 11 and the inner end of the second movable frame 12 being hinged by a hinge shaft 13, and the carrier frame 2 is arranged on the first movable frame 11 and the second movable frame 12; the driving device comprises a driving motor, a driving shaft 33 and driving wheels 32, and the driving motor is arranged on the movable frame 1.

Document US 2020/017145 A1 discloses a chassis comprising a frame, two hanging units symmetrically provided at both sides of the frame, and a front guiding wheel and a rear universal wheel provided below the frame, wherein each of the hanging units comprises a mounting rack fixedly connected to the frame, a hanging rack slidably connected to the mounting rack, and a driving wheel rotatably connected to the hanging rack, and the front guiding wheel is provided with a first driving motor, and the driving wheel of each hanging unit is driven by a second driving motor, and wherein a closed loop speed control system is formed between the first driving motor and both second driving motors, such that a rotational angle of the front guiding wheel is adjustable via the first driving motor when revolving speeds of both second driving motors are changed.

### Summary

Embodiments of the present disclosure provide a chassis structure and a transport vehicle to optimize the applicability of the chassis structure of the transport vehicle.

The invention is set out in the appended set of claims.

The technical solution adopted in the present disclosure can achieve the following beneficial effects:
In the chassis structure of the embodiment of the present disclosure, the main frame and subframe constitute the main body part of the chassis structure, and the overall size of the chassis structure is determined by the sizes of the main frame and the subframe. Due to the detachable connection between the edges of the subframe and the main frame, there will be no restrictions when replacing subframes with different sizes. When the size of the subframe changes, the overall size of the chassis structure will change, thus the chassis structure is matched with the different types of transport vehicles, which undoubtedly can optimize the applicability of the chassis structure in the present disclosure.

### Brief Description of the Drawings

The drawings described here are intended to provide a further understanding of the present disclosure and form a part of the present disclosure. The schematic embodiments of the present disclosure and the explanations thereof are used to explain the present disclosure and do not constitute an improper limitation on the present disclosure. In the figures:
Fig. 1 is a schematic structural diagram of a chassis structure disclosed in an embodiment of the present disclosure;
Fig. 2 is a schematic structural diagram of a main frame disclosed in an embodiment of the present disclosure;
Fig. 3 is a schematic assembly diagram of a main frame and a subframe disclosed in an embodiment of the present disclosure;
Fig. 4 is schematic structural diagrams of two different types of transport vehicles disclosed in an embodiment of the present disclosure;
Fig. 5 is a schematic partial enlarged diagram at A in Fig. 1;
Fig. 6 is a schematic partial enlarged diagram at B in Fig. 1;

### LIST OF REFERENCE SIGNS:

100 - Main frame, 110 - Front frame body, 12 - Rear frame body, 121 - Guide hole
I1 - First installation area, I2 - First installation space, S1 - First step section, S2 - Second step section, I3 - Second installation space, M - Installation seat
200 - Traveling wheel set, 210 - Traveling wheel
300 - Subframe, 310 - Frame unit, 311 - Second installation area
S2 - Second step section
400 - Damping device, 410 - Limiting element, 420 - Elastic element
500 - Pin shaft.

### Detailed Description

In order to make the objects, technical solutions and advantages of the present disclosure, more clearly, technical solutions of the present disclosure will be described clearly in detail below with reference to the appended drawings and embodiments of the present disclosure.

Technical solutions disclosed in respective embodiments of the present disclosure will be further described in detail below with reference to the appended drawings.

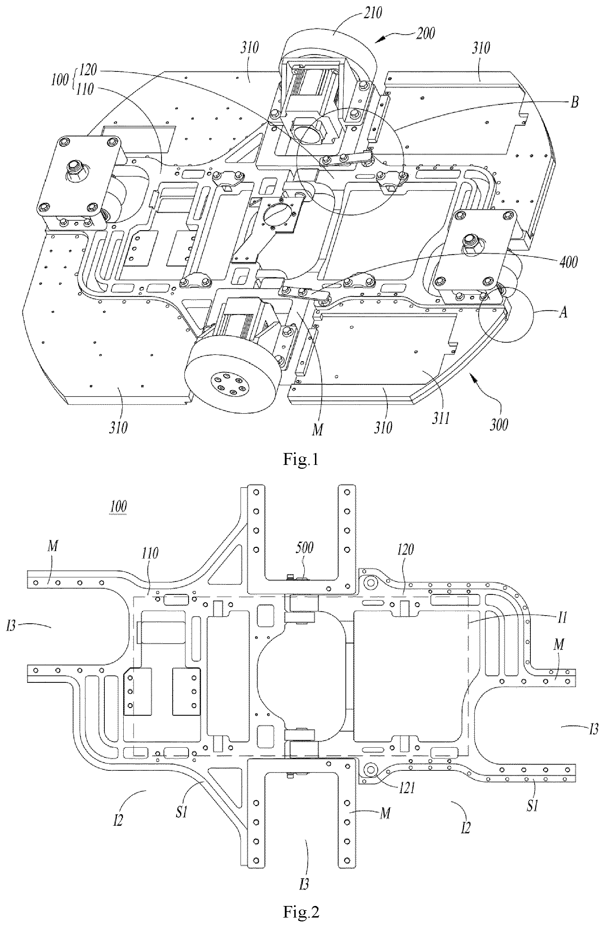

In order to solve the problem of poor applicability of a chassis structure of a transport vehicle in related technologies, as shown in Figs. 1 to 3, the embodiment of the present disclosure provides a chassis structure suitable for a transport vehicle. The chassis structure disclosed includes a main frame 100, a traveling wheel set 200 and a subframe 300.

The main frame 100 is a first main member of the chassis structure, which can provide an installation foundation for other members of the chassis structure. Meanwhile, the main frame 100 also provides an installation foundation for functional assemblies, the vehicle body, etc. of the transport vehicle. Specifically, as shown in Fig. 2, the main frame 100 can be provided with a first installation area I1, which is configured to install various types of functional assemblies such as a lifting module, a rotating module, a transfer module, and a traction module. Due to a superior strength and stiffness of the main frame 100, it is more reliable and safer to install these heavy functional assemblies on the main frame 100. The first installation area I1 can be provided with installation grooves, snap-fit elements, and other installation and fixation structures. The installation and fixation structures can have a restraining and limiting effect on the functional assemblies, thereby improving installation stability.

In order to optimize the lightweight design of the chassis structure, the main frame 100 can be provided with a hollow area, which can reduce the weight of the chassis structure and reduce the energy loss of the transport vehicle during operation. The main frame 100 can be made of a lightweight alloy material, but the specific material of the main frame 100 is not limited in the present embodiment. The Lightweight alloy material can be selected as titanium alloy, magnesium alloy, or aluminum alloy, etc.

The traveling wheel set 200 is a mobile functional member of the chassis structure, and is installed on the main frame 100. By means of the traveling wheel set 200, the chassis structure can move on a support surface (e.g., a floor, a track, a workshop passageway, etc.).

The traveling wheel set 200 includes a plurality of traveling wheels 210, which can be specifically divided into two types, i.e., driving wheels and auxiliary wheels. The driving wheels provide power for the forward, backward movement and steering and other mobile actions of the chassis structure. The driving wheels can be integrated with a hub motor, and of course can be driven by the driving member in the functional assemblies of the transport vehicle. The auxiliary wheels play a supporting role, and cooperate with the driving wheels, so that the chassis structure is stably placed on the supporting surface; the auxiliary wheels can be universal wheels to adapt to the requirements of the steering action.

The subframe 300 is also a second main member of the chassis structure, which together with the main frame 100 constitutes the main part of the chassis structure, so the overall size of the chassis structure is influenced by both the sizes of the main frame 100 and the subframe 300.

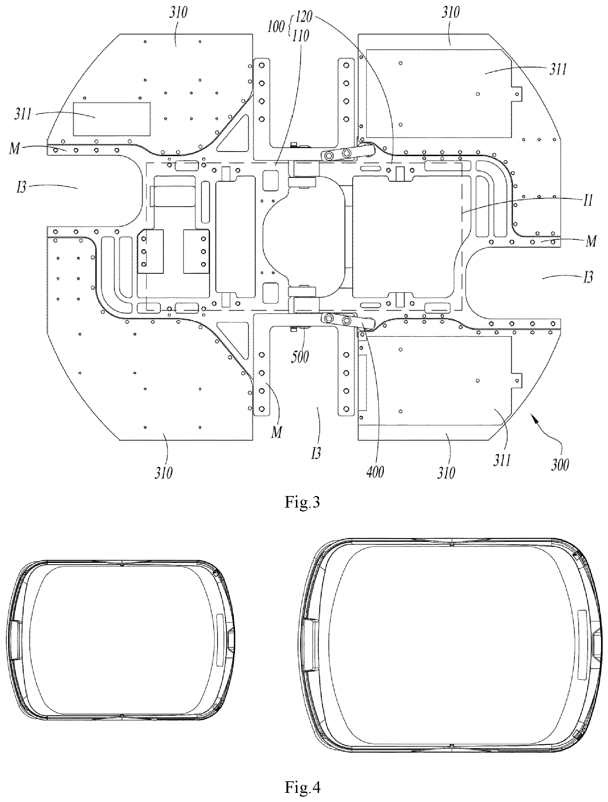

In the present embodiment, the subframe 300 is detachably connected to the main frame 100, so that the subframe 300 and the main frame 100 can be conveniently installed with and detached from each other. The overall size of the chassis structure can be changed by changing the size of the subframe 300 during detaching and installing. Referring to Figs. 2 and 3, Fig. 2 shows a schematic diagram of the main frame 100 with the subframe 300 detached, and Fig. 3 shows a schematic diagram of the main frame 100 with the subframe 300 installed.

Meanwhile, the subframe 300 is provided along at least a portion of an edge of the main frame 100, and it should be understood that the subframe 300 may be provided along a portion of the edge of the main frame 100 or along the entire circumferential edge of the main frame 100, and the specific structure type of the subframe 300 is not limited in the present embodiment. Since the subframe 300 is provided along the edge of the main frame 100, the subframe 300 with a larger size will not be interfered by the main frame 100 during arrangement, so that the smooth assembly of the subframes 300 with different sizes to the main frame 100 can be realized.

In some embodiments of the present disclosure, in order to avoid the effect of the subframe 300 on the traveling wheel set 200, the subframe 300 should avoid the traveling wheel set 200, that is, no matter what size of the subframe 300 is replaced, the subframe 300 will not interfere with the traveling wheel set 200, and the traveling wheel set 200 is able to realize actions such as rotating and steering, thereby ensuring the smooth movement of the chassis structure.

Since the overall size of the chassis structure of the present embodiment is changeable, it can be adapted to the different types of transport vehicles, extending the use range of the chassis structure. Specifically, when the transport vehicle is large, the original subframe 300 of the chassis structure can be detached from the main frame 100, and then a subframe 300 with a larger size can be selected to be installed to the main frame 100 to ensure that the subframe 300 and the main frame 100 are matched with the type of the transport vehicle after installing. When the transport vehicle is small, the original subframe 300 of the chassis structure can be detached from the main frame 100, and then a subframe 300 with a smaller size can be selected to be installed to the main frame 100, so as to ensure that the subframe 300 and the main frame 100 are matched with the type of the transport vehicle after installing. It follows that the chassis structure of the present embodiment is an installing platform with the main frame 100 as the core, and in combination of the replaceable feature of the subframe 300, a variety of types of chassis structures can be quickly derived to meet the demand for customization of the type of the transport vehicle, which reduces the research and development process and production process of various types of the chassis structures, reduces the cost of manufacture of the product, and undoubtedly enhances the market competitiveness of the product.

Fig. 4 shows a schematic diagram illustrating the change of the overall size of the chassis structure by installing two different sizes of the subframe 300, thereby realizing the matching of the chassis structure with the type of the transport vehicle.

In some embodiments of the present disclosure, the subframe 300 may also provide an installing foundation for the functional assemblies, the vehicle body and the like of the transport vehicle. Specifically, as shown in Fig. 3, the subframe 300 can be provided with a second installation area 311 for installing at least one of a main control module, a drive module, and a power module. It should be understood that the main control module, the drive module and the power module are functional assemblies of the transport vehicle, and these lighter functional assemblies are installed on the subframe 300, which imposes lower load capacity requirements on the subframe 300, and thus the installation reliability and safety are guaranteed to a certain extent.

Of course, the specific functional assemblies to be installed in the second installation area 311 is not limited in the present embodiment, and the second installation area 311 may also be configured to install other functional assemblies such as a navigation and positioning module. In the case that the installation space of the second installation area 311 is insufficient, the above modules may also be installed in the first installation area I1.

**In** combination with the requirements for the load capacity of the subframe 300, in order to further optimize the lightweight design of the chassis structure, the subframe 300 of the present embodiment may be a plastic structural member, which is less dense and can further reduce the weight of the chassis structure, and meanwhile, the plastic material also has a cost advantage. Of course, the subframe 300 may also be a lightweight alloy, which may be selected as titanium alloy, magnesium alloy, or aluminum alloy.

The second installation area 311 may be installed with only one of the main control module, the drive module, and the power module, or with two of the above three modules, or with all of the above modules. Since the size of the subframe 300 of the present embodiment can be changed, when the subframe 300 has a larger size, the area of the installation arrangement area on its upper surface will be larger, so that more functional assemblies can be installed. Of course, this needs to be determined according to the specific size of the subframe 300 selected according to the chassis structure, which is not limited in the present embodiment.

The first installation area I1 can also be configured with installation grooves, snap-fit elements, and other installation and fixation structures. As the size of the subframe 300 changes, the area of the installation arrangement area on it will change, that is, the specific functional assemblies carried on the subframe 300 will change. Therefore, it is necessary to make adaptive structural adjustments to the installation and fixing structure on the subframe 300. Taking the installation groove as an example, when replacing the subframe 300 with a subframe of a larger size, functional assemblies with larger sizes can be installed and fixed on it. At this time, the installation groove on the subframe 300 can be set to a larger size; When replacing the subframe 300 with a subframe of a smaller size, only smaller functional assemblies can be installed and fixed on it. At this time, the installation groove on the subframe 300 can be set to a smaller size. Of course, even if the same functional assemblies are installed, the installation position of the functional assemblies can be adjusted by changing the setting position of the installation grooves on the subframe 300 to adjust the arrangement of the functional assemblies inside the transport vehicle. For example, the main control module can be provided adjacent to the drive wheel to facilitate wiring and improve installation convenience.

From the above explanation, it can be seen that in the chassis structure disclosed in an embodiment of the present disclosure, the main frame 100 and the subframe 300 jointly constitute the main part of the chassis structure, and the overall size of the chassis structure is determined by the sizes of the main frame 100 and the subframe 300. Due to the detachable connection between the edges of the subframe 300 and the main frame 100 in the embodiment of the present disclosure, there is no restriction when replacing subframes 300 of different sizes. When the size of the subframe 300 changes, the overall size of the chassis structure will change, thus the chassis structure is matched with different types of transport vehicles, which undoubtedly can optimize the applicability of the chassis structure in the embodiment of the present disclosure.

As previously mentioned, the specific structural type of the subframe 300, which can be an integrated structure is not limited in the present embodiment. For example, the subframe 300 can be a circular frame body. However, the subframe 300 of the integrated structure is difficult to assemble and there is also a problem of high replacement cost when damaged. Based on this, as shown in Fig. 1, the subframe 300 of the present embodiment may include a plurality of frame units 310, each of which is assembled as an independent structure on the main frame 100.

Under this setting, compared to the subframe 300 of a single integrated structure, the area of the connection area between the frame unit 310 and the main frame 100 will be smaller, which inevitably reduces the difficulty of assembly. Meanwhile, when a frame unit 310 is damaged, only the frame unit 310 needs to be replaced, without the need to replace the entire subframe 300, which undoubtedly reduces the replacement cost.

In the present embodiment, there can be multiple structural types of frame units 310, for example, a plate structure, a frame beam structure, etc., which is not limited in the present embodiment.

The traveling wheel set 200 includes a plurality of traveling wheels 210, which are substantially evenly distributed along the circumference of the chassis structure, so as to make the support effect on the chassis more balanced. In order to avoid interference and conflict with the traveling wheels 210 during the arrangement of the frame units 310, as shown in Fig. 1, the traveling wheels 210 and the frame units 310 of the present embodiment are alternately arranged along the circumferential direction of the main frame 100. Under this setting, there is a space between the traveling wheels 210 to install the frame units 310. The frame units can be adaptively arranged according to the arrangement of the traveling wheels 210, and this can also make the frame units 310 substantially evenly distributed along the circumference of the chassis structure, ensuring a more uniform distribution of the self-weight of the chassis structure and avoiding the risk of tilting.

In order to match the chassis structure with the type of the transport vehicle, the contours of the main frame 100 and the subframe 300 after assembly should match the type of the transport vehicle. However, the subframe 300 itself has a certain size, and when assembled to the main frame 100, it will cause the contour of the chassis structure to be unable to match the type of the transport vehicle. Based on this, as shown in Fig. 2, the edge of the main frame 100 in the present embodiment can be provided with a first installation space I2, which is configured to accommodate the subframe 300. The subframe 300 can be detachably connected to the main frame 100 in the first installation space I2.

Specifically, the main frame 100 can reserve a corresponding size of the first installation space I2 based on the actual type of transport vehicle, and the size of the first installation space I2 matches the size of the subframe 300. When the subframe 300 is assembled to the main frame 100, the subframe 300 fills the gap in the edge area of the main frame 100. At this time, the overall contour of the combination of the subframe 300 and the main frame 100 is matched with the type of the transport vehicle. In this implementation, the sizes and contours of the subframe 300 and the main frame 100 are provided according to the type of the transport vehicle, so that the overall contour of the chassis structure can match the type of the transport vehicle.

Combining the implementation of the subframe 300 including a plurality of frame units 310 mentioned above, the first installation space I2 can be provided between the traveling wheels 210, so that when the frame units 310 are provided in the first installation space I2, it not only realizes the alternating arrangement of the frame unit 310 and the traveling wheels 210, but also ensures that the overall contour of the chassis structure can match the type of the transport vehicle.

In the present embodiment, the specific contour of the chassis structure is not limited, as shown in Fig. 1. The chassis structure has a rectangular-like contour. At this time, four frame units 310 are arranged at the four corners of the chassis structure, while the traveling wheels 210 are arranged in the middle area of the side edges of the chassis structure. In other implementations, the chassis structure can have circular, triangular or other contours.

In some embodiments disclosed herein, during the design and manufacturing process of the main frame 100, the structure of the main frame 100 can also be optimized in advance through force flow analysis and static strength analysis, and the utilization rate of materials can be improved.

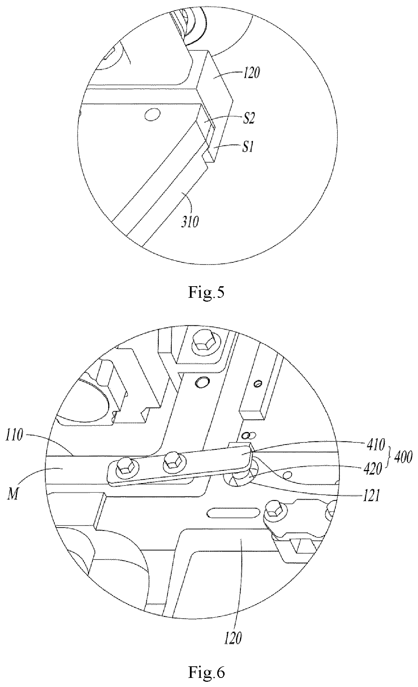

In the present embodiment, there are various ways to detachably connect the main frame 100 and the subframe 300. For example, the main frame 100 and the subframe 300 can be detachably connected through bonding, snap-fit connections, welding, and other methods. In another specific implementation, as shown in Fig. 5, the main frame 100 of the present embodiment can be provided with a first step section S1, and the subframe 300 can be provided with a second step section S2. The first step section S1 and the second step section S2 are stacked up and down, and are detachably connected by fasteners along the stacking direction of the first step section S1 and the second step section S2.

It should be understood that the main frame 100 serves as the installation foundation for the subframe 300 through the first step section S1. In the specific assembly process, the subframe 300 can be lap-jointed on the first step section S1 through the second step section S2. Based on the engagement relationship between the first step section S1 and the second step section S2, the subframe 300 can be quickly positioned on the main frame 100. In the case of positioning, the operator can smoothly install the fasteners in place and achieve the assembly of the subframe 300 on the main frame 100. Meanwhile, in this implementation, the fasteners are arranged along the stacking direction of the first step section S1 and the second step section S2, and there is a sufficient operating space above or below the first step section S1 and the second step section S2, which can be conveniently connected to the first step section S1 and the second step section S2 through the fasteners, thereby improving the assembly efficiency of the subframe 300 and the main frame 100.

It should be noted that the specific types of the fasteners are not limited in the present embodiment, which can be screws, bolts, pins, etc. Compared with other detachable connection methods in related technologies, the use of the fasteners to achieve a detachable connection relationship also provides better connection strength between the subframe 300 and the main frame 100, thereby ensuring good working stability of the chassis structure.

Based on the implementation of the subframe 300 including a plurality of frame units 310 mentioned above, as shown in Fig. 2, the main frame 100 can be equipped with a first step section S1 at each of edges located in the four first installation spaces I2, as shown in Fig. 3. Each of the four frame units 310 included in the subframe 300 can be equipped with a second step section S2. These first and second step sections exist independently. In the implementation of the subframe 300 as an integrated structure, a continuous second step section S2 can be provided on the subframe 300, and a corresponding continuous first step section S1 can be provided on the main frame 100 at its edge.

In related technologies, the frame of the chassis structure is an integrated structure. When the transport vehicle moves on an uneven support surface, the chassis structure will experience bumps, causing some areas to tilt upwards. This will cause some traveling wheels 210 to leave the support surface, leading to the risk of slipping and overturning of the transport vehicle. Based on this, as shown in Figs. 1 and 2, the main frame 100 of the present embodiment may include a front frame body 110 and a rear frame body 120 that are engaged and hinged to form a folding degree of freedom between the front frame body and the rear frame body.

It should be understood that under this setting, the front frame body 110 can be folded relative to the rear frame body 120, and the rear frame body 120 can also be folded relative to the front frame body 110. The folding degree of freedom include degrees of freedom of upward tilting and downward sagging. When the transport vehicle passes through an uneven support surface, it can ensure that the traveling wheel 210 is in contact with the support surface with appropriate degrees of freedom. Specifically, if encountering a concave support surface, the front frame body 110 and the rear frame body 120 will experience relative folding, and the front frame body 110 or the rear frame body 120 will float downwards through the degree of freedom of downward sagging, thereby causing the traveling wheel 210 to come into contact with the support surface. If encountering a raised support surface, the front frame body 110 and the rear frame body 120 will experience relative folding, and the front frame body 110 or the rear frame body 120 will float upwards through the degree of freedom of upward tilting, causing the traveling wheel 210 to come into contact with the support surface.

Therefore, both the front frame body 110 and the rear frame body 120 of the present embodiment can make the traveling wheels 210 always come into contact with the support surface through actions of upward tilting or downward sagging, thereby ensuring that all traveling wheels 210 of the chassis structure always come into contact with the support surface. This ensures the smoothness of the transport vehicle during movement and optimizes its adaptability to various road conditions.

It should be noted that in the present embodiment, there is a folding gap reserved between the front frame body 110 and the rear frame body 120, and the folding gap can enable the aforementioned folding degree of freedom. The folding gap can provide a rotation space for the front frame body 110 and rear frame body 120 at the hinge point, avoiding the interference between the front frame body 110 and the rear frame body 120 during rotation.

As shown in Figs 2 and 3, the front frame body 110 and the rear frame body 120 are hinged through a pin shaft 500. In this setting, the pin shaft 500 is equivalent to a rotation shaft between the front frame body 110 and the rear frame body 120, and the pin shaft 500 can allow the front frame body 110 and the rear frame body 120 to achieve relative folding. As an independent component, the pin shaft 500 is easy to install and detach, and will not occupy too much installation space on the main frame 100. The specific number of hinge structures between the front frame body 110 and the rear frame body 120 is not limited in the present embodiment. As shown in Figs. 2 and 3. there are two pin shafts 500, and the two pin shafts 500 are symmetrically arranged on the main frame 100 relative to each other, which is conducive to optimizing the smoothness of the chassis structure's operation. Of course, the number of the pin shaft 500 can also be set as one, three, and another number.

In order to achieve rotational engagement with the pin shaft 500, a connecting arm can be provided at the engagement between the front frame body 110 and the rear frame body 120. The connecting arms of the front frame body 110 and the rear frame body 120 are both equipped with coaxial holes. After the connecting arms of the two are connected together, the pin shaft 500 can be inserted into the coaxial holes. The pin shaft 500 serves as a rotation shaft between the front frame body 110 and the rear frame body 120, and the connecting arms rotate around the pin shaft 500, and thus achieving the relative folding of the front frame body 110 and the rear frame body 120.

**In** the present embodiment, there are various ways to achieve articulation of the front frame body 110 and the rear frame body 120. **In** addition to the aforementioned method of achieving articulation through a pin shaft 500, for example, a rotation shaft can be directly set on the connecting arm of one of the front frame body 110 and the rear frame body 120, and a matching hole can be provided on the connecting arm of the other one of the front frame body and the rear frame body. The rotation shaft passes through and is in a rotational engagement with the matching hole.

When the folding angle between the front frame body 110 and the rear frame body 120 is too large, it will cause the severe vibration of the overall chassis structure, which will cause damage to the chassis structure. Based on this, as shown in Fig. 1, the chassis structure of the present embodiment can further include a damping device 400, which is provided at the engagement of the front frame body 110 and the rear frame body 120 and is configured to constrain the folding degree of freedom. It should be understood that during the operation of the chassis structure in the present embodiment, the damping device 400 will always maintain constraints on the folding degree of freedom between the front frame body 110 and the rear frame body 120. Even if the transport vehicle passes through extremely uneven support surfaces, the damping device 400 will constrain the folding degree of the front frame body 110 and the rear frame body 120 within a reasonable range, ensuring the smooth operation of the chassis structure. Meanwhile, the damping device 400 can also damp and reduce the folding degree of freedom, continuously consuming the vibration energy transmitted from the support surface and reducing the damage to the chassis structure.

The damping device 400 of the present embodiment can have multiple types. As shown in Fig. 6, specifically, the damping device 400 of the present embodiment can include a limiting element 410 and an elastic element 420. One of the front frame body 110 and the rear frame body 120 is provided with the limiting element 410, and the other of the front frame body and the rear frame body is provided with the elastic element 420. The limiting element 410 extends to be connected to the elastic element 420, the elastic element 420 is configured to generate an elastic resistance between the front frame body 110 and the rear frame body 120 to constrain the folding degree of freedom.

Specifically, the specific setting positions of the elastic element 420 and the limiting element 410 are not limited in the present embodiment. As shown in Fig. 6. the limiting element 410 can be provided on the front frame body 110, and the elastic element 420 can be correspondingly provided on the rear frame body 120. Of course, the limiting element 410 can also be provided on the rear frame body 120, and the elastic element 420 can be correspondingly provided on the front frame body 110. In the implementation shown in Fig. 6, based on the relationship between the front frame body 110 and the rear frame body 120, if an elastic element 420 is directly provided between the front frame body 110 and the rear frame body 120, it will cause severe deformation of the elastic element 420 and thus the failing of reliably and effectively generation of the elastic resistance, resulting in a worse constraint effect on the folding degree of freedom. In the present embodiment, the limiting element 410 is equivalent to an adapter of the front frame body 110. When the limiting element 410 extends to be connected to the elastic element 420, it can ensure that the elastic element 420 can smoothly apply an elastic resistance to the front frame body 110 and the rear frame body 120.

In the specific working process, when there is a degree of freedom of upward tilting for the front frame body 110 and/or the rear frame body 120, the elastic element 420 will be compressed and gradually store energy. Therefore, when the elastic element 420 is compressed, it will apply a rebound force to the front frame body 110 and the rear frame body 120 to hinder the continued folding thereof, and the energy that drives the folding of the front frame body 110 and the rear frame body 120 will be gradually consumed, which undoubtedly can effectively avoid excessive floating of the front frame body 110 and/or rear frame body 120. When there is a degree of freedom of downward sagging between the front frame body 110 and/or the rear frame body 120, the elastic element 420 will be stretched and gradually store energy. Therefore, when stretched, the elastic element 420 will apply a pulling force that hinders both the front frame body 110 and the rear frame body 120 from continuing to fold, and the energy that drives the front frame body 110 and the rear frame body 120 to fold will gradually be consumed, which undoubtedly can effectively avoid excessive downward sagging of the front frame body 110 and/or the rear frame body 120.

Meanwhile, based on the characteristics of the elastic element 420, during the process of restoring deformation of the elastic element 420, the front frame body 110 and rear frame body 120 can be quickly reset, which can improve the time for the chassis structure to ensure higher flatness and further optimize the operational stability of the chassis structure.

As shown in Fig. 6, in order to further avoid severe deformation of the elastic element 420 and the inability to effectively apply an elastic resistance, a guide hole 121 can be provided on the main frame 100 of the present embodiment. The elastic element 420 is at least partially provided inside the guide hole 121, and the limiting element 410 can extend to the opening of the guide hole 121 and be connected to the elastic element 420. When in use, when the elastic element 420 is compressed or stretched and undergoes deformation, the hole wall of the guide hole 121 will support the elastic element 420 to prevent the significant deformation of the elastic element 420, so that the elastic element 420 can apply an elastic resistance to the front frame body 110 and rear frame body 120 in a predetermined direction.

It should be noted that the elastic element 420 can be selected as a spring, rubber structure, foam structure, etc. The specific type of the elastic element 420 is not limited in the present embodiment. The specific type of the limiting element 410 is not limited in the present embodiment. As shown in Fig. 6, the limiting element 410 can be a limit plate provided on the front frame body 110. In other embodiments, the limiting element 410 can also be an outwardly extended connecting arm that is integrally formed with the front frame body 110. The specific type of the damping device 400 is not limited in the present embodiment. For example, in the aforementioned embodiment where the front frame body 110 and rear frame body 120 are hinged through a pin shaft 500 and a connecting arm, the damping device 400 may only include a buffer pad provided in the pin shaft 500 and the connecting arm, which can achieve vibration reduction by increasing friction.

During the use of the chassis structure in the present embodiment, when changing the overall size of the chassis structure by replacing the subframe 300 with different sizes, it will result in the inability of the traveling wheel set 200 to adapt, which will lead to a decrease in the stability of the chassis structure during operation. Based on this, as shown in Figs. 2 and 3, in the present embodiment, the traveling wheel set 200 includes a plurality of traveling wheels 210. The main frame 100 can be provided with second installation spaces I3, and installation seats M arranged around the second installation spaces I3. The second installation spaces I3 are configured to accommodate the traveling wheels 210, and the installation seats M are configured to fix the traveling wheels 210. Each of the installation seats M has a plurality of fixing positions along a direction from the center to the edge of the main frame 100.

Specifically, based on the existence of the second installation spaces I3, installation positions are reserved for the traveling wheels 210 on the main frame 100, and no matter what size of subframe 300 after replacement, it will not interfere with the traveling wheels 210. The installation seats M are the foundation for the installation of the traveling wheels 210, and are provided around the second installation spaces I3, which can ensure that the traveling wheels 210 are located in the second installation spaces I3 after installation.

Meanwhile, the chassis structure of the present embodiment achieves compatibility between the traveling wheel set 200 and the chassis structure by arranging the traveling wheels 210 at different fixing positions on the installation seats M. When the size of the subframe 300 is smaller, the traveling wheels 210 can be adjusted to be installed in fixing positions closer to the center of the main frame 100 on the installation seat M, so that the supporting range of the traveling wheel set 200 is more compact. When the size of the subframe 300 is larger, the traveling wheels 210 can be adjusted to be installed in fixing positions closer to the edge of the main frame 100 on the installation seats M, so that the supporting range of the traveling wheel set 200 is expanded. In summary, under this setting, the traveling wheel set 200 of the present embodiment can adjust the specific setting positions of each traveling wheel 210 according to the size of the subframe 300, to ensure that the traveling wheel set 200 can match the overall size of the chassis structure.

In the present embodiment, there is no restriction on the specific connection relationship between the traveling wheels 210 and the installation seats M. For example, different snap-fit positions can be set on the installation seats M. The traveling wheels 210 are in snap-fit engagement with the installation seats M, and the traveling wheel 210 is matched with different snap-fit positions to achieve position adjustment. **In** another specific implementation, as shown in Fig. 2, two rows of installation holes are sequentially arranged on the installation seat M along a direction from the center to the edge of the main frame 100, and the two rows of installation holes are opposite to each other one by one. The traveling wheels 210 can be fixedly installed on the installation seats M through the coordination of the fasteners and the installation holes, and the different rows of installation holes determine the different installation positions of the traveling wheel 210.

In the implementation shown in Fig. 2, each installation seat M has four rows of installation holes. If the traveling wheel 210 is fixed through only one row of installation holes, then in the direction from the center to the edge of the main frame 100, the traveling wheel 210 has four fixing positions. If the traveling wheel 210 is fixed through two rows of installation holes, then in the direction from the center to the edge of the main frame 100, the traveling wheel 210 has three fixing positions, one of which is the four installation holes in the first and second rows, the four installation holes in the second and third rows, and the four installation holes in the third and fourth rows.

As shown in Fig. 6, in order to facilitate the installation of the traveling wheels 210, the installation seats M can be provided as convex platform structures. In combination with the above implementation where the damping device 400 includes the elastic element 420 and the limiting element 410, the limiting element 410 can be provided on the installation seat M, so that there is a height difference between the limiting element 410 connected to the front frame body 110 and the surface of the rear frame body 120, making it more convenient to arrange the elastic element 420, and cause the elastic element 420 to have a deformation distance.

Of course, the specific structure of the installation seat M is not limited in the present embodiment. In other embodiments, the installation seat M can also have only one row of installation holes, but the installation reliability and stability of the traveling wheel 210 in this way are not as good as the two row installation holes mentioned above. The structure of the installation seat M can also be related to the structural layout of the main frame 100.

Based on the aforementioned chassis structure, the embodiment of the present disclosure further provides a transport vehicle comprising a functional assembly and the aforementioned chassis structure, wherein the functional assembly is installed on the chassis structure. The transport vehicle of the present embodiment can be AGV, RGV, IGV, etc., and the specific type of the transport vehicle is not limited in the present disclosure.

## Claims

1. A chassis structure suitable for a transport vehicle, **characterized in** comprising:
a main frame (100);
a traveling wheel set (200) installed on the main frame (100);
a subframe (300) detachably connected to the main frame (100);
wherein the subframe (300) is provided along at least a portion of an edge of the main frame (100) and avoids the traveling wheel set (200),
wherein the traveling wheel set (200) comprises a plurality of traveling wheels (210); the main frame (100) is provided with installation spaces for the traveling wheels (I3), and installation seats arranged around the installation spaces for the traveling wheels (I3); the installation spaces for the traveling wheels (I3) are configured to accommodate the traveling wheels (210), and the installation seats are configured to fixedly install the traveling wheels (210);
the chassis being **characterised in that**
each of the installation seats has a plurality of fixing positions along a direction from a center to the edge of the main frame (100), the chassis structure achieves compatibility between the traveling wheel set (200) and the chassis structure by arranging the traveling wheels (210) at different fixing positions on the installation seats, wherein, when a size of the subframe (300) is smaller, the traveling wheels (210) are adjusted to be installed in fixing positions closer to the center of the main frame (100) on the installation seats, and when the size of the subframe (300) is larger, the traveling wheels (210) are adjusted to be installed in fixing positions closer to the edge of the main frame (100) on the installation seats.

2. The chassis structure as claimed in claim 1, wherein the subframe (300) comprises a plurality of frame units (310), and the traveling wheels (210) and the frame units (310) are arranged alternately along a circumferential direction of the main frame (100).

3. The chassis structure as claimed in claim 1, wherein the edge of the main frame (100) is provided with an installation space for the subframe (I2), which is configured to accommodate the subframe (300); and the subframe (300) is detachably connected to the main frame (100) in the installation space for the subframe (I2).

4. The chassis structure as claimed in claim 1, wherein the subframe (300) is provided with a second installation area (311) for installing at least one of a main control module, a drive module, and a power module.

5. The chassis structure as claimed in claim 1, wherein the main frame (100) is provided with a first step section (S1), and the subframe (300) is provided with a second step section (S2); the first step section (S1) and the second step section (S2) are stacked up and down, and are detachably connected by fasteners along a stacking direction of the first step section (S1) and the second step section (S2).

6. The chassis structure as claimed in any one of claims 1 to 5, wherein the main frame (100) comprises a front frame body (110) and a rear frame body (120) that are engaged and hinged to form a folding degree of freedom between the front frame body (110) and the rear frame body (120).

7. The chassis structure as claimed in claim 6, wherein the chassis structure further comprises a damping device (400), which is provided at an engagement of the front frame body (110) and the rear frame body (120) and is configured to constrain the folding degree of freedom.

8. The chassis structure as claimed in claim 7, wherein the damping device (400) comprises a limiting element (410) and an elastic element (420); one of the front frame body (110) and the rear frame body (120) is provided with the limiting element (410) and the other of the front frame body (110) and the rear frame body (120) is provided with the elastic element (420); the limiting element (410) extends to be connected to the elastic element (420), and the elastic element (420) is configured to generate an elastic resistance between the front frame body (110) and the rear frame body (120) to constrain the folding degree of freedom.

9. A transport vehicle, **characterized in** comprising:
a functional assembly;
the chassis structure as claimed in any one of claims 1 to 8;
wherein the functional assembly is installed on the chassis structure.

## Patentansprüche

1. Fahrgestellkonstruktion für ein Transportfahrzeug geeignet, **dadurch gekennzeichnet, dass** sie umfasst:
einen Hauptrahmen (100);
einen am Hauptrahmen (100) angebrachten Fahrradsatz (200);
einen Hilfsrahmen (300), der lösbar mit dem Hauptrahmen (100) verbunden ist;
wobei der Hilfsrahmen (300) entlang mindestens eines Teils einer Kante des Hauptrahmens (100) vorgesehen ist und den Fahrradsatz (200) umgeht,
wobei der Fahrradsatz (200) mehrere Fahrräder (210) umfasst; der Hauptrahmen (100) mit Einbauräumen für die Laufräder (I3) sowie um die Einbauräume für die Laufräder (I3) herum angeordneten Einbausitzen versehen ist; die Einbauräume für die Laufräder (I3) so ausgebildet sind, dass sie die Laufräder (210) aufnehmen, und die Einbausitze so ausgebildet sind, dass sie die Laufräder (210) fest montieren; wobei das Fahrgestell **dadurch gekennzeichnet ist, dass**
jede der Einbausitze eine Vielzahl von Befestigungspositionen entlang einer Richtung von der Mitte zum Rand des Hauptrahmens (100) aufweist, wobei die Fahrgestellkonstruktion eine Kompatibilität zwischen dem Laufradsatz (200) und der Fahrgestellkonstruktion erreicht, indem die Laufräder (210) an verschiedenen Befestigungspositionen auf den Einbausitzen angeordnet werden, wobei, wenn eine Größe des Hilfsrahmens (300) kleiner ist, die Laufräder (210) so eingestellt werden, dass sie an Befestigungspositionen auf den Einbausitzen montiert werden, die näher an der Mitte des Hauptrahmens (100) liegen, und wenn die Größe des Hilfsrahmens (300) größer ist, die Laufräder (210) so eingestellt werden, dass sie an Befestigungspositionen auf den Einbausitzen montiert werden, die näher am Rand des Hauptrahmens (100) liegen.

2. Fahrgestellkonstruktion nach Anspruch 1, wobei der Hilfsrahmen (300) mehrere Rahmeneinheiten (310) umfasst und die Laufräder (210) sowie die Rahmeneinheiten (310) abwechselnd entlang einer Umfangsrichtung des Hauptrahmens (100) angeordnet sind.

3. Fahrgestellkonstruktion nach Anspruch 1, wobei der Rand des Hauptrahmens (100) mit einem Einbauraum für den Hilfsrahmen (I2) versehen ist, der zur Aufnahme des Hilfsrahmens (300) ausgebildet ist; und der Hilfsrahmen (300) im Einbauraum für den Hilfsrahmen (I2) lösbar mit dem Hauptrahmen (100) verbunden ist.

4. Fahrgestellkonstruktion nach Anspruch 1, wobei der Hilfsrahmen (300) mit einem zweiten Einbaubereich (311) zum Einbau mindestens eines von einem Hauptsteuermodul, einem Antriebsmodul und einem Leistungsmodul versehen ist.

5. Fahrgestellkonstruktion nach Anspruch 1, wobei der Hauptrahmen (100) mit einem ersten Stufenabschnitt (S1) versehen ist und der Hilfsrahmen (300) mit einem zweiten Stufenabschnitt (S2) versehen ist; der erste Stufenabschnitt (S1) und der zweite Stufenabschnitt (S2) sind vertikal übereinander angeordnet und entlang einer Stapelrichtung des ersten Stufenabschnitts (S1) und des zweiten Stufenabschnitts (S2) durch Befestigungselemente lösbar miteinander verbunden.

6. Fahrgestellkonstruktion nach einem der Ansprüche 1 bis 5, wobei der Hauptrahmen (100) einen vorderen Rahmenkörper (110) und einen hinteren Rahmenkörper (120) umfasst, die ineinandergreifen und gelenkig verbunden sind, um einen Klappfreiheitsgrad zwischen dem vorderen Rahmenkörper (110) und dem hinteren Rahmenkörper (120) zu bilden.

7. Fahrgestellkonstruktion nach Anspruch 6, wobei die Fahrgestellkonstruktion ferner eine Dämpfungsvorrichtung (400) umfasst, die an einer Verbindungsstelle des vorderen Rahmenkörpers (110) und des hinteren Rahmenkörpers (120) vorgesehen ist und so ausgebildet ist, dass sie den Klappfreiheitsgrad begrenzt.

8. Fahrgestellkonstruktion nach Anspruch 7, wobei die Dämpfungsvorrichtung (400) ein Begrenzungselement (410) und ein elastisches Element (420) umfasst; entweder der vordere Rahmenkörper (110) oder der hintere Rahmenkörper (120) ist mit dem Begrenzungselement (410) versehen, und der jeweils andere der beiden Rahmenkörper (110, 120) ist mit dem elastischen Element (420) versehen; das Begrenzungselement (410) erstreckt sich so, dass es mit dem elastischen Element (420) verbunden ist, und das elastische Element (420) ist so ausgebildet, dass es einen elastischen Widerstand zwischen dem vorderen Rahmenkörper (110) und dem hinteren Rahmenkörper (120) erzeugt, um die Faltfreiheitsgrade einzuschränken.

9. Transportfahrzeug, **dadurch gekennzeichnet, dass** es umfasst:
eine Funktionsbaugruppe;
die Fahrgestellkonstruktion gemäß einem der Ansprüche 1 bis 8;
wobei die Funktionsbaugruppe an der Fahrgestellkonstruktion angebracht ist.

## Revendications

1. Structure de châssis, adaptée à un véhicule de transport, **caractérisée en ce qu'**elle comprend :
un cadre principal (100) ;
un ensemble roue-train roulant (200) installé sur le cadre principal (100) ;
un sous-châssis (300) relié de manière amovible au cadre principal (100) ;
le sous-châssis (300) étant prévu le long d'au moins une section d'un bord du cadre principal (100) et entourant l'ensemble roue-train roulant (200),
l'ensemble roue^ (210) sont disposées au niveau de différentes positions de fixation sur les sièges de montage, sachant que, lorsqu'une taille du sous-châssis (300) est plus petite, les roues de train roulant (210) sont réglées de manière à être installées, au niveau des sièges de montage, à des positions de fixation plus proches du centre du cadre principal (100), et lorsqu'une taille du sous-châssis (300) est plus grande, les roues de train roulant (210) sont réglées de manière à être installées, au niveau des sièges de montage, à des positions de fixation plus proches du bord du cadre principal (100).

2. La structure de châssis selon la revendication 1, dans laquelle le sous-châssis (300) comprend une pluralité d'unités de cadre (310), et les roues de train roulant (210) et les unités de cadre (310) sont disposées en alternance le long d'une direction circonférentielle du cadre principal (100).

3. La structure de châssis selon la revendication 1, dans laquelle le bord du cadre principal (100) est pourvu d'un espace de réception pour le sous-châssis (I2) configuré pour recevoir le sous-châssis (300) ; et le sous-châssis (300) est relié de manière amovible au cadre principal (100) dans l'espace de réception pour le sous-châssis (I2).

4. La structure de châssis selon la revendication 1, dans laquelle le sous-châssis (300) est pourvu d'une deuxième zone d'installation (311) destinée à recevoir un module de commande principal, un module d'entraînement et/ou un module de puissance.

5. La structure de châssis selon la revendication 1, dans laquelle le cadre principal (100) est pourvu d'une première section en gradin (S1) et le sous-châssis (300) est pourvu d'une deuxième section en gradin (S2) ; la première section en gradin (S1) et la deuxième section en gradin (S2) étant disposées l'une au-dessus de l'autre et reliées de manière amovible l'une à l'autre par des éléments de fixation le long d'une direction d'empilement de la première section en gradin (S1) et de la deuxième section en gradin (S2).

6. La structure de châssis selon l'une quelconque des revendications 1 à 5, dans laquelle le cadre principal (100) comprend un corps de cadre avant (110) et un corps de cadre arrière (120) qui s'emboîtent et sont reliés de manière articulée l'un à l'autre de manière à former un degré de liberté de pliage entre le corps de cadre avant (110) et le corps de cadre arrière (120).

7. La structure de châssis selon la revendication 6, dans laquelle la structure de châssis comprend en outre un dispositif d'amortissement (400) prévu au niveau d'un point d'emboîtement entre le corps de cadre avant (110) et le corps de cadre arrière (120) et configuré pour limiter le degré de liberté de pliage.

8. La structure de châssis selon la revendication 7, dans laquelle le dispositif d'amortissement (400) comprend un élément de limitation (410) et un élément élastique (420) ; le corps de cadre avant (110) ou le corps de cadre arrière (120) étant pourvu de l'élément de limitation (410), et l'autre corps de cadre, à savoir le corps de cadre arrière (120) ou le corps de cadre avant (110), étant pourvu de l'élément élastique (420) ; l'élément de limitation (410) s'étendant de manière à être relié à l'élément élastique (420), et l'élément élastique (420) étant configuré pour générer une résistance élastique entre le corps de cadre avant (110) et le corps de cadre arrière (120) afin de limiter le degré de liberté de pliage.

9. Véhicule de transport, comprenant :
un ensemble fonctionnel ;
la structure de châssis selon l'une quelconque des revendications 1 à 8 ;
l'ensemble fonctionnel étant installé sur la structure de châssis.
